# EUROPÄISCHE PATENTSCHRIFT

(11) **EP 2 470 599 B1**
(45) Veröffentlichungstag und Bekanntmachung des Hinweises auf die Patenterteilung: **01.05.2013**
(21) Anmeldenummer: 10747191.4
(22) Anmeldetag: 24.08.2010
(51) Int. Cl.: C08K 5/5419, C09D 143/04, C09J 143/04

(54) **ZUSAMMENSETZUNGEN AUF BASIS VON SILANTERMINIERTEN POLYMEREN**
Compounds based on silane-terminated polymers
Compositions à base de polymères fixés par silane

(30) Priorität: 24.08.2009 EP 09168475
(43) Veröffentlichungstag der Anmeldung: 04.07.2012
(73) Patentinhaber: Sika Technology AG, 6340 Baar (CH)
(72) Erfinder: CHOFFAT, Fabien, CH-4522 Rüttenen (CH); FEDIER, Sara, CH-8048 Zürich (CH)
(74) Vertreter: Sika Patent Attorneys
(86) Internationale Anmeldenummer: PCT/EP2010/062326
(87) Internationale Veröffentlichungsnummer: WO 2011/023691

(56) Entgegenhaltungen:
- WO-A1-2007/085620
- DE-A1- 10 139 132
- US-A1- 2004 116 639
- US-B1- 6 255 404

## Beschreibung

### Technisches Gebiet

Das Gebiet betrifft feuchtigkeitshärtende Zusammensetzungen auf Basis silanfunktioneller Polymere, welche sich als Klebstoffe, Dichtstoffe oder Beschichtungen eignen.

### Stand der Technik

Feuchtigkeitshärtende Zusammensetzungen auf Basis von silanfunktionellen Polymeren sind bekannt und werden seit geraumer Zeit als elastische Klebstoffe, Dichtstoffe und Beschichtungen eingesetzt.

Für zahlreiche Anwendungen, beispielsweise bei der Verklebung, Abdichtung oder Beschichtung von Materialien mit unterschiedlichen thermischen Ausdehnungskoeffizienten oder von Substraten, welche Schwingungen ausgesetzt sind, ist es erforderlich, dass derartige Zusammensetzungen im ausgehärteten Zustand über gute mechanische Eigenschaften und gute Haftungseigenschaften verfügen. Insbesondere wichtig sind eine hohe Dehnbarkeit, ein gutes Rückstellvermögen, ein tiefer Modul sowie ein hoher Weiterreisswiderstand. Diesen Anforderungen genügen bekannte Zusammensetzungen oft nicht.

Zur Herstellung von niedermoduligen, also elastischen, Zusammensetzungen wurden bereits verschiedene Ansätze verfolgt.

Beispielsweise beschreibt EP 1 877 459 A1 Zusammensetzungen mit erhöhter Dehnbarkeit umfassend ein silanfunktionelles Polymer, ein Aminosilan sowie spezifische α-funktionelle Organodialkoxysilane, welche eine geringere Vernetzung herbeiführen und so den Modul der ausgehärteten Zusammensetzung erniedrigen. Der Nachteil derartiger Zusammensetzungen ist der Einsatz der hochreaktiven und verhältnismässig kostspieligen α-funktionellen Organodialkoxysilane.

Weiterhin beschreibt beispielsweise WO 03/066701 A1 Zusammensetzungen auf Basis von silanfunktionellen Polymeren umfassend Alkoxysilan- und Hydroxylendgruppen aufweisende Polyurethanpolymere auf Basis von hochmolekularen Polyurethanpolymeren mit erniedrigter Funktionalität. Nachteilig erweist sich hierbei die relativ aufwendige Herstellung der Alkoxysilan- und Hydroxylendgruppen aufweisenden Polyurethanpolymere.

Ebenfalls bekannt ist die Erhöhung der Weichmacherkonzentration in der Zusammensetzung zur Erniedrigung des Moduls, was jedoch zu Weichmachermigration und/oder zu Phasenseparation führen kann.

### Darstellung der Erfindung

Aufgabe der vorliegenden Erfindung ist es daher, eine feuchtigkeitshärtende Zusammensetzung auf Basis von silanfunktionellen Polymeren bereitzustellen, welche im ausgehärteten Zustand über gute mechanische Eigenschaften und gute Haftungseigenschaften verfügt und gleichzeitig eine verbesserte Dehnbarkeit und einen tiefen Elastizitätsmodul (E-Modul) aufweist.

Überraschenderweise wurde nun gefunden, dass Zusammensetzungen gemäss Anspruch 1 diese Aufgabe lösen.

Durch den Einsatz von spezifischen Alkyltrialkoxysilanen kann der Modul von feuchtigkeitshärtenden Zusammensetzungen auf der Basis von silanfunktionellen Polymeren auf einfache Weise erniedrigt werden. Die erfindungsgemässe Zusammensetzung verfügt somit im ausgehärteten Zustand über gute mechanische Eigenschaften und gute Haftungseigenschaften und weist gleichzeitig eine verbesserte Dehnbarkeit und einen tiefen E-Modul auf.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Zusammensetzung umfassend
a) mindestens ein silanfunktionelles Polymer **P**; sowie
b) mindestens ein Alkyltrialkoxysilan der Formel (I),

   R²-Si-(OR¹)₃ (I)

   wobei
   R¹ für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist; und
   R² für einen verzweigten Kohlenwasserstoffrest mit 6 bis 10 C-Atomen steht.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyhamstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter "Molekulargewicht" versteht man im vorliegenden Dokument stets das Molekulargewichtsmittel Mₙ (Zahlenmittel).

Als "Raumtemperatur" wird im vorliegenden Dokument eine Temperatur von 23 °C bezeichnet.

Die erfindungsgemässe Zusammensetzung enthält mindestens ein silanfunktionelles Polymer **P**, welches insbesondere Endgruppen der Formel (II) aufweist.

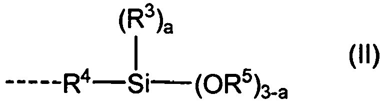

Dabei steht der Rest R³ für einen linearen oder verzweigten, einwertigen Kohlenwasserstoffrest mit 1 bis 8 C-Atomen, insbesondere für eine Methyl- oder für eine Ethylgruppe.

Der Rest R⁴ steht für einen linearen oder verzweigten, zweiwertigen Kohlenwasserstoffrest mit 1 bis 12 C-Atomen, welcher gegebenenfalls cyclische und/oder aromatische Anteile, und gegebenenfalls ein oder mehrere Heteroatome, insbesondere ein oder mehrere Stickstoffatome, aufweist.

Der Rest R⁵ steht für einen Acylrest oder für einen linearen oder verzweigten, einwertigen Kohlenwasserstoffrest mit 1 bis 5 C-Atomen, insbesondere für eine Methyl- oder für eine Ethyl- oder für eine Isopropylgruppe.

Der Index a steht für einen Wert von 0 oder 1 oder 2, insbesondere für einen Wert von 0.

Innerhalb einer Silangruppe der Formel (II) stehen R³ und R⁵ jeweils unabhängig voneinander für die beschriebenen Reste. So sind beispielsweise auch Verbindungen mit Endgruppen der Formel (II) möglich, welche Ethoxydimethoxysilan-Endgruppen (R⁵ = Methyl, R⁵ = Methyl, R⁵ = Ethyl) sind.

In einer ersten Ausführungsform ist das silanfunktionelle Polymer **P ein** silanfunktionelles Polyurethanpolymer **P1**, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist.

In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan AS der Formel (III), 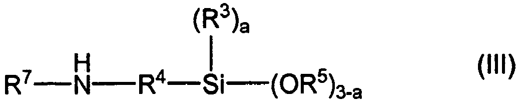 wobei R³, R⁴, R⁵ und a bereits vorhergehend beschrieben worden sind und R⁷ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (IV) steht.

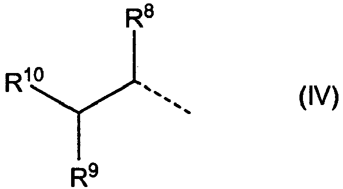

Dabei stehen die Reste R⁸ und R⁹ jeweils unabhängig voneinander für ein Wasserstoffatom oder für einen Rest aus der Gruppe bestehend aus -R¹¹, -COOR¹¹ und -CN.

Der Rest R¹⁰ steht für ein Wasserstoffatom oder für einen Rest aus der Gruppe bestehend aus -CH₂-COOR¹¹, -COOR¹¹, -CONHR¹¹, -CON(R¹¹)₂, -CN, -NO₂, -PO(OR¹¹)₂, -SO₂R¹¹ und -SO₂OR¹¹.

Der Rest R¹¹ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, (Meth)acrylsäureestern, (Meth)acrylsäureamiden, Maleinsäure- und Fumarsäurediestem, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **AS** besonders geeignet sind sekundäre Aminosilane, insbesondere Aminosilane **AS**, bei denen R⁷ in Formel (III) verschieden von H ist. Bevorzugt sind die Michael-artigen Addukte, insbesondere N-(3-Trimethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1, 3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Beispielsweise sind geeignete silanfunktionelle Polymere **P1** kommerziell erhältlich unter den Handelsnamen Polymer ST, beispielsweise Polymer ST50, von der Firma Hanse Chemie AG, Deutschland, sowie unter dem Handelsnamen Desmoseal^{®} von der Firma Bayer MaterialScience AG, Deutschland.

Das silanfunktionelle Polymer **P** ist in einer zweiten Ausführungsform ein silanfunktionelles Polyurethanpolymer **P2**, erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20 °C bis 100°C, gegebenenfalls unter Mitverwendung von Katalysatoren.

Als Isocyanatosilan IS geeignet sind Verbindungen der Formel (V). 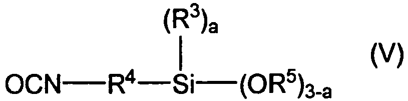 wobei R³, R⁵, R⁴ und a bereits vorhergehend beschrieben wurden.

Beispiele für geeignete Isocyanatosilane **IS** der Formel (V) sind Isocyanatomethyltrimethoxysilan, Isocyanatomethyldimethoxymethylsilan 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen **IS** der Formel (V). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen SPUR+^{®} 1010LM, 1015LM und 1050MM von der Firma Momentive Performance Materials Inc., USA, sowie unter den Handelsnamen Geniosil^{®} STP-E15, STP-10 und STP-E35 von der Firma Wacker Chemie AG, Deutschland.

In einer dritten Ausführungsform ist das silanfunktionelle Polymer **P** ein silanfunktionelles Polymer **P3**, welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren gesamte Offenbarung hiermit eingeschlossen ist.

Beispielsweise sind geeignete silanfunktionelle Polymere **P3** kommerziell erhältlich unter den Handelsnamen MS Polymer™ S203H, S303H, S227, S810, MA903 und S943, Silyl™ SAX220, SAX350, SAX400 und SAX725, Silyl™ SAT350 und SAT400, sowie XMAP™ SA100S und SA310S von der Firma Kaneka Corp., Japan, sowie unter den Handelsnamen Excestar^{®} S2410, S2420, S3430, S3630, W2450 und MSX931 von der Firma Asahi Glass Co, Ltd., Japan.

Üblicherweise ist das silanfunktionelle Polymer **P** in einer Menge von 10 bis 80 Gew.-%, insbesondere in einer Menge von 15 bis 70 Gew.-%, bevorzugt 20 bis 40 Gew.-%, bezogen auf die gesamte Zusammensetzung, vorhanden.

Bevorzugt entspricht in der erfindungsgemässen Zusammensetzung der Rest R⁵ in den Endgruppen der Formel (II) dem Rest R¹ im Alkyltrialkoxysilan der Formel (I).

Meist bevorzugt weist also das silanfunktionelle Polymer **P** in der erfindungsgemässen Zusammensetzung Endgruppen der Formel (II') auf 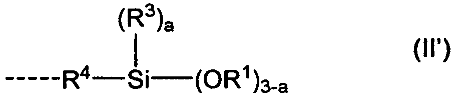 wobei R¹ sowohl im silanfunktionellen Polymer **P** als auch im Alkyltrialkoxysilan der Formel (I) für identische Reste steht, welche bereits vorhergehend beschrieben worden sind.

Die Reste R³ und R⁴, sowie der Index a sind ebenfalls bereits vorhergehend beschrieben worden.

Weiterhin umfasst die erfindungsgemässe Zusammensetzung mindestens ein Alkyltrialkoxysilan der Formel (I), wie es vorhergehend beschrieben worden ist.

Der Rest R¹ steht insbesondere für eine Methyl- oder für eine Ethyl- oder für eine Isopropylgruppe, bevorzugt für eine Methylgruppe.

Der Rest R² steht insbesondere für einen verzweigten Kohlenwasserstoffrest mit 8 C-Atomen. Bevorzugt handelt es sich beim verzweigten Kohlenwasserstoffrest um eine mehrfach verzweigte Alkylgruppe. Weiterhin bevorzugt enthält der verzweigte Kohlenwasserstoffrest eine tertiär-Butylgruppe. Meist bevorzugt steht der Rest R² für einen 2,4,4-Trimethylpentylrest.

Insbesondere handelt es sich beim Alkyltrialkoxysilan der Formel (I) in der erfindungsgemässen Zusammensetzung um Trimethoxy(2,4,4-trimethylpentyl)silan.

Der Anteil an Alkyltrialkoxysilan der Formel (I) beträgt vorzugsweise 0.05 bis 4 Gew.-% der gesamten Zusammensetzung.

Vorzugsweise enthält die Zusammensetzung weiterhin mindestens einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 20 bis 60 Gew.-%, bevorzugt 30 bis 60 Gew.-%, bezogen auf die gesamte Zusammensetzung.

Weiterhin enthält die erfindungsgemässe Zusammensetzung insbesondere mindestens einen Katalysator für die Vernetzung der silanfunktionellen Polymere mittels Feuchtigkeit. Derartige Katalysatoren sind insbesondere Metallkatalysatoren in Form von Organozinnverbindungen wie Dibutylzinndilaurat und Dibutylzinndiacetylacetonat, Titankatalysatoren, Aminogruppenhaltige Verbindungen, beispielsweise 1,4-Diazabicyclo[2.2.2]octan und 2,2'-Dimorpholinodiethylether, Aminosilane sowie Mischungen der genannten Katalysatoren.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Es ist vorteilhaft, alle genannten, in der Zusammensetzung gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die erfindungsgemässe Zusammensetzung weist vorzugsweise nach deren Aushärtung, insbesondere nach deren Aushärtung während mindestens 14 Tagen bei 23 °C und 50 % relativer Luftfeuchtigkeit, einen Elastizitätsmodul bei 0 bis 100 % Dehnung von ≤ 0.4 MPa, insbesondere ≤ 0.36 MPa, gemessen nach DIN EN 53504 mit einer Zuggeschwindigkeit von 200 mm/min, und eine Härte Shore A von ≥ 10, gemessen nach DIN 53505, auf.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation der beschriebenen Zusammensetzung auf mindestens einen Festkörper oder Artikel kommen die in der Zusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die beispielsweise über einen Statikmischer eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt und verlangsamt sich in der Regel mit dem Fortschreiten der Aushärtung.

Weiterhin umfasst die vorliegende Erfindung die Verwendung einer vorhergehend beschriebenen Zusammensetzung als feuchtigkeitshärtender Klebstoff, Dichtstoff oder Beschichtung, insbesondere als Baudichtstoff. Bevorzugt ist die Verwendung als niedermoduliger Baudichtstoff für Anschluss- oder Dilatationsfugen.

Die erfindungsgemässe Zusammensetzung wird insbesondere verwendet in einem Verfahren des Verklebens zweier Substrate **S1** und **S2** umfassend die Schritte
i) Applikation einer Zusammensetzung gemäss vorhergehender Beschreibung auf ein Substrat **S1** und/oder ein Substrat **S2**;
ii) Kontaktieren der Substrate **S1** und **S2** über die applizierte Zusammensetzung innerhalb der Offenzeit der Zusammensetzung;
iii) Aushärtung der Zusammensetzung mittels Wasser;
wobei die Substrate **S1** und **S2** gleich oder verschieden voneinander sind.

Weiterhin kann die erfindungsgemässe Zusammensetzung auch verwendet werden in einem Verfahren der Abdichtung oder des Beschichtens umfassend die Schritte
i') Applikation einer Zusammensetzung gemäss vorhergehender Beschreibung auf ein Substrat **S1** und/oder zwischen zwei Substrate **S1** und **S2**;
ii') Aushärtung der Zusammensetzung mittels Wasser, insbesondere in der Form von Luftfeuchtigkeit;
wobei die Substrate **S1** und **S2** gleich oder verschieden voneinander sind.

Als Substrate **S1** und/oder **S2** eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Weiterhin betrifft die Erfindung eine gehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit.

Bei den Artikeln, welche mit einer erfindungsgemässen Zusammensetzung verklebt, abgedichtet oder beschichtet werden, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels.

Weiterhin betrifft die Erfindung die Verwendung eines Alkyltrialkoxysilans der Formel (I), wie es als Bestandteil der erfindungsgemässen Zusammensetzung vorhergehend beschrieben worden ist, in Zusammensetzungen auf Basis von silanterminierten Polymeren zur Erhöhung der Elastizität und zur Erniedrigung des E-Moduls dieser Zusammensetzungen im ausgehärteten Zustand.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die Zugfestigkeit, die Bruchdehnung, und der Elastizitätsmodul (E-Modul) bei 0 bis 100 % Dehnung wurden nach DIN EN 53504 (Zuggeschwindigkeit: 200 mm/min) an während 14 Tagen bei 23 °C und 50 % relativer Luftfeuchtigkeit ausgehärteten Filmen mit einer Schichtdicke von 2 mm bestimmt.

Der **Zug-E-Modul** wurde gemäss DIN EN ISO 8340 unter der Verwendung von mit Sika^{®} Primer-3 N (kommerziell erhältlich bei Sika^{®} Schweiz AG) vorbehandelten Beton-Prüfkörpern (Beton, nass, nach ISO 13640, von der Firma Rocholl GmbH, Deutschland, 70mm x 25mm x 12.5 mm) bestimmt. Die Probekörper wurden 4 Wochen bei 23 °C und 50 % relativer Luftfeuchtigkeit ausgehärtet.

Die **Shore A-Härte** wurde bestimmt nach DIN 53505, an während 14 Tagen bei 23 °C und 50 % relativer Luftfeuchtigkeit ausgehärteten Probekörpern mit einer Schichtdicke von 6 mm.

Die **Hautbildungszeit** (Zeit bis zur Klebefreiheit, "tack-free time") wurde bei 23 °C und 50 % relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels einer Pipette aus LDPE erstmals keine Rückstände auf der Pipette mehr zurückblieben.

Der **Weiterreisswiderstand** wurde bestimmt nach DIN 53515, an während 14 Tagen bei 23 °C und 50 % relativer Luftfeuchtigkeit ausgehärteten Filmen mit einer Schichtdicke von 2 mm.

### Herstellung des silanfunktionellen Polyurethanpolymers SH

Unter Stickstoffatmosphäre wurden 700 g Polyol Acclaim^{®} 12200 (Bayer MaterialScience AG, Deutschland; low monol Polyoxypropylendiol; OH-Zahl 11.0 mg KOH/g; Wassergehalt ca. 0.02 Gew.-%), 24.6 g Isophorondiisocyanat (Vestanat^{®} IPDI, Evonik Degussa GmbH, Deutschland), 182 g 2,2,4-Trimethyl-1,3-pentandioldiisobutyrat (Eastman TXIB™; Eastman Chemical Company, USA) und 0.1 g Di-n-butyl-zinndilaurat (Metatin^{®} K 712, Acima AG, Schweiz) unter stetigem Rühren auf 90 °C aufgeheizt und bei dieser Temperatur belassen. Nach einer Stunde Reaktionszeit wurde mittels Titration ein freier Gehalt an Isocyanatgruppen von 0.32 Gew.-% erreicht. Anschliessend wurden 24.5 g N-(3-Trimethoxysilyl-propyl)-amino-bernsteinsäure-diethylester beigefügt und für weitere 2 bis 3 Stunden bei 90 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23 °C) abgekühlt und unter Ausschluss von Feuchtigkeit aufbewahrt (theoretischer Polymergehalt = 80%). Das so hergestellte silanfunktionelle Polyurethanpolymer ***SH*** ist bei Raumtemperatur flüssig.

N-(3-Trimethoxysilyl-propyl)-amino-bernsteinsäure-diethylester wurde wie folgt hergestellt: 51.0 g 3-Aminopropyl-trimethoxysilan (Silquest^{®} A-1110, Momentive Performance Materials Inc., USA) wurden vorgelegt. Unter gutem Rühren wurden bei Raumtemperatur langsam 49.0 g Maleinsäure-diethylester (Fluka Chemie GmbH, Schweiz) zugegeben und die Mischung während 2 Stunden bei Raumtemperatur gerührt.

### Herstellung des Thixotropierungsmittels TM

In einem Vakuummischer wurden 1000 g Diisodecylphthalat (Palatinol^{®} Z, BASF SE, Deutschland) und 160 g 4,4'-Diphenylmethandiisocyanat (Desmodur^{®} 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel ***TM*** enthält 20 Gew.-% Thixotropierungsmittel in 80 Gew.-% Diisodecylphthalat.

### Herstellung der Klebstoffe

In einem Vakuummischer wurden entsprechend den in den Tabellen 1 und 2 angegebenen Gewichtsteilen ein silanfunktionelles Polymer (*SH* bzw. ***MS***), Thixotropierungsmittel ***TM*** und Vinyltrimethoxysilan (Silquest^{®} A-171 von Momentive Performance Materials Inc., USA) während 5 Minuten gut vermischt. Anschliessend wurde getrocknete, gefällte Kreide (Socal^{®} U1S2, Solvay SA, Belgien, und Omyacarb^{®} 5-GU, Omya AG, Schweiz) während 15 Minuten bei 60 °C eingeknetet. Bei ausgeschalteter Heizung wurden anschliessend N-(2-Aminoethyl)-(3-aminopropyl)trimethoxysilan (Silquest^{®} A-1120 von Momentive Performance Materials Inc.) und Katalysator (Metatin^{®} K712 als 10 %-ige Lösung in DIDP) unter Vakuum während 10 Minuten zu einer homogenen Paste verarbeitet. Diese wurde dann in innenlackierte Aluminium-Spreizkolbenkartuschen abgefüllt.

**Tabelle 1 Zusammensetzungen der erfindungsgemässen Klebstoffe 1 bis 4 und der Referenzbeispiele 5 bis 9 in Gewichtsteilen sowie die Resultate;**

| | ***1*** | ***2*** | ***3*** | ***4*** | ***5*** | ***6*** | ***7*** | ***8*** | ***9*** |
|---|---|---|---|---|---|---|---|---|---|
| ***SH*** | 120 | 120 | 120 | 120 | 120 | 120 | 120 | 120 | 120 |
| Silquest^{®} A-171 | 4 | 4 | 4 | 4 | 4 | 4 | 4 | 4 | 4 |
| ***TM*** | 100 | 100 | 100 | 100 | 100 | 100 | 100 | 100 | 100 |
| Omyacarb^{®} 5-GU | 80 | 80 | 80 | 80 | 80 | 80 | 80 | 80 | 80 |
| Socal^{®} U1S2 | 80 | 80 | 80 | 80 | 80 | 80 | 80 | 80 | 80 |
| Silquest^{®} A-1120 | 2 | 2 | 2 | 2 | 2 | 2 | 2 | 2 | 2 |
| Metatin^{®} K712 ^{a)} | 10 | 10 | 10 | 10 | 10 | 10 | 10 | 10 | 10 |
| Silan R^{2'}-Si(OCH₃)₃ | | | | | | | | | |
| R^{2'} : 2,4,4-Trimethylpentyl ^{b)} | 1 | 2 | 4 | 8 | | | | | |
| R^{2'} : Methyl ^{b)} | | | | | | 4 | | | |
| R^{2'} : n-Octyl ^{c)} | | | | | | | 4 | | |
| R^{2'} : n-Hexadecyl ^{b)} | | | | | | | | 4 | |
| R^{2'} : i-Butyl ^{b)} | | | | | | | | | 4 |
| | | | | | | | | | |
| Zugfestigkeit [MPa] | 1.3 | 1.3 | 1.3 | 1.0 | 1.4 | 1.2 | 1.3 | 1.3 | 1.3 |
| Bruchdehnung [%] | 681 | 754 | 932 | 936 | 497 | 368 | 695 | 724 | 735 |
| E-Modul [MPa] | 0.39 | 0.36 | 0.32 | 0.23 | 0.46 | 0.47 | 0.39 | 0.39 | 0.36 |
| Zug-E-Modul [MPa] | 0.41 | 0.35 | 0.30 | 0.21 | 0.48 | 0.48 | 0.36 | 0.38 | 0.37 |
| Hautbildungszeit [min] | 65 | 80 | 80 | 105 | 45 | 70 | 105 | 80 | 80 |
| Shore A | 21 | 19 | 17 | 13 | 20 | 25 | 20 | 20 | 20 |
| Weiterreisswiderstand [N/mm] | 6.1 | 6.3 | 6.4 | 5.7 | 6.1 | 5.0 | 5.8 | 6.1 | 6.0 |

| | | | | | | | | | |
|---|---|---|---|---|---|---|---|---|---|
| ^{a)} 10 %-ige Lösung in DIDP; ^{b)} erhältlich von Wacker Chemie AG, Deutschland; ^{c)} erhältlich von ABCR GmbH & Co KG, Deutschland. | | | | | | | | | |

**Tabelle 2 Zusammensetzungen der erfindungsgemässen Klebstoffe 10 und 11 und des Referenzbeispiels 12 in Gewichtsteilen sowie die Resultate;**

| | ***10*** | ***11*** | ***12*** |
|---|---|---|---|
| ***MS*** ^{d)} | 120 | 120 | 120 |
| Silquest^{®} A-171 | 4 | 4 | 4 |
| ***TM*** | 100 | 100 | 100 |
| Omyacarb^{®} 5-GU | 80 | 80 | 80 |
| Socal^{®} U1S2 | 80 | 80 | 80 |
| Silquest^{®} A-1120 | 2 | 2 | 2 |
| Metatin^{®} K740 | 1.2 | 1.2 | 1.2 |
| Silan R^{2'}-Si(OCH₃)₃ | | | |
| R^{2'} : 2,4,4-Trimethylpentyl | 2 | 4 | |
| | | | |
| Zugfestigkeit [MPa] | 1.2 | 1.1 | 1.1 |
| Bruchdehnung [%] | 617 | 695 | 474 |
| E-Modul [MPa] | 0.37 | 0.31 | 0.42 |
| Zug-E-Modul [MPa] | 0.43 | 0.37 | 0.49 |
| Shore A | 24 | 22 | 26 |
| Weiterreisswiderstand [N/mm] | 4.2 | 4.3 | 4.2 |

| | | | |
|---|---|---|---|
| ^{d)} ***MS***: MS Polymer S303H, Kaneka Corp., Japan. | | | |

## Patentansprüche

1. Zusammensetzung umfassend
a) mindestens ein silanfunktionelles Polymer **P**; sowie
b) mindestens ein Alkyltrialkoxysilan der Formel (I),
R²-Si-(OR¹)₃ (I)
wobei
R¹ für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist; und
R² für einen verzweigten Kohlenwasserstoffrest mit 6 bis 10 C-Atomen steht.

2. Zusammensetzung gemäss Anspruch 1, **dadurch gekennzeichnet, dass** R¹ für eine Methyl- oder für eine Ethyl- oder für eine Isopropylgruppe, steht.

3. Zusammensetzung gemäss Anspruch 2, **dadurch gekennzeichnet, dass** R¹ für eine Methylgruppe steht.

4. Zusammensetzung gemäss einem der vorhergehenden Ansprüche, **dadurch gekennzeichnet, dass** R² für einen verzweigten Kohlenwasserstoffrest mit 8 C-Atomen steht.

5. Zusammensetzung gemäss einem der vorhergehenden Ansprüche, **dadurch gekennzeichnet, dass** der verzweigte Kohlenwasserstoffrest eine mehrfach verzweigte Alkylgruppe ist.

6. Zusammensetzung gemäss einem der vorhergehenden Ansprüche, **dadurch gekennzeichnet, dass** R² für einen 2,4,4-Trimethylpentylrest steht.

7. Zusammensetzung gemäss Anspruch 1, **dadurch gekennzeichnet, dass** das Alkyltrialkoxysilan der Formel (I) Trimethoxy(2,4,4-trimethylpentyl)silan ist.

8. Zusammensetzung gemäss einem der vorhergehenden Ansprüche, **dadurch gekennzeichnet, dass** das silanfunktionelle Polymer **P** Endgruppen der Formel (II') aufweist 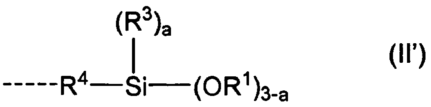 wobei
R¹ sowohl im silanfunktionellen Polymer **P** als auch im Alkyltrialkoxysilan der Formel (I) für identische Reste steht;
R³ für eine Alkylgruppe mit 1 bis 8 C-Atomen steht;
R⁴ für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen steht; und
a für einen Wert von 0 oder 1 steht.

9. Zusammensetzung gemäss einem der vorhergehenden Ansprüche, **dadurch gekennzeichnet, dass** der Anteil an Alkyltrialkoxysilan der Formel (I) 0.05 bis 4 Gew.-% der gesamten Zusammensetzung beträgt.

10. Zusammensetzung gemäss einem der vorhergehenden Ansprüche, **dadurch gekennzeichnet, dass** die Zusammensetzung nach deren Aushärtung einen Elastizitätsmodul bei 0 bis 100 % Dehnung von ≤ 0.4 MPa, gemessen nach DIN EN 53504 mit einer Zuggeschwindigkeit von 200 mm/min, und eine Härte Shore A von ≥ 10, gemessen nach DIN 53505, aufweist.

11. Verwendung einer Zusammensetzung gemäss einem der Ansprüche 1 bis 10 als feuchtigkeitshärtender Klebstoff, Dichtstoff oder Beschichtung.

12. Verwendung gemäss Anspruch 11 als Baudichtstoff.

13. Gehärtete Zusammensetzung, **dadurch gekennzeichnet, dass** sie erhältlich ist aus einer Zusammensetzung gemäss einem der Ansprüche 1 bis 10 nach deren Härtung mit Wasser.

14. Verwendung eines Alkyltrialkoxysilans der Formel (I), wie es in einem der Ansprüche 1 bis 10 beschreiben ist, in Zusammensetzungen auf Basis von silanterminierten Polymeren zur Erhöhung der Elastizität und zur Erniedrigung des E-Moduls dieser Zusammensetzungen im ausgehärteten Zustand.

## Claims

1. A composition comprising
a) at least one silane-functional polymer **P**; and
b) at least one alkyltrialkoxysilane of the formula (I),
R²-Si-(OR¹)₃ (I)
where
R¹ represents a linear or branched univalent hydrocarbon moiety having from 1 to 12 carbon atoms, which comprises optionally one or more C-C multiple bonds and/or optionally cycloaliphatic and/or aromatic fractions; and
R² represents a branched hydrocarbon moiety having from 6 to 10 carbon atoms.

2. The composition according to claim 1, **characterized in that** R¹ represents a methyl or an ethyl or an isopropyl group.

3. The composition according to claim 2, **characterized in that** R¹ represents a methyl group.

4. The composition according to any one of the preceding claims, **characterized in that** R² represents a branched hydrocarbon moiety having 8 carbon atoms.

5. The composition according to any one of the preceding claims, **characterized in that** the branched hydrocarbon moiety is a polybranched alkyl group.

6. The composition according to any one of the preceding claims, **characterized in that** R² represents a 2,4,4-trimethylpentyl moiety.

7. The composition according to claim 1, **characterized in that** the alkyltrialkoxysilane of the formula (I) is trimethoxy(2,4,4-trimethylpentyl)-silane.

8. The composition according to any one of the preceding claims, **characterized in that** the silane-functional polymer **P** has terminal groups of the formula (II') 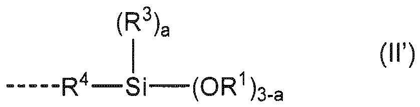 where
R¹ represents identical moieties both in the silane-functional polymer **P** and in the alkyltrialkoxysilane of the formula (I);
R³ represents an alkyl group having from 1 to 8 carbon atoms;
R⁴ represents a linear or branched, optionally cyclic alkylene group having from 1 to 12 C atoms, optionally with aromatic proportions, and optionally with one or several heteroatoms; and
a represents a value of 0 or 1.

9. The composition according to any one of the preceding claims, **characterized in that** the content of alkyltrialkoxysilane of the formula (I) is from 0.05 to 4 % by weight of the entire composition.

10. The composition according to any one of the preceding claims, **characterized in that** the composition, after curing, has a modulus elasticity at 0 to 100% elongation of ≤ 0.4 MPa, measured according to DIN EN 53504 with a tensile speed of 200 mm/min, and a Shore A hardness of ≥ 10, measured according to DIN 53505.

11. Use of a composition according to any one of claims 1 to 10 as moisture-curing adhesive, sealant or coating.

12. The use according to claim 11 as construction sealant.

13. A cured composition, **characterized in that** it is obtainable from a composition according to any one of claims 1 to 10 after the curing thereof with water.

14. Use of an alkyltrialkoxysilane of the formula (I) described in any one of claims 1 to 10 in compositions on the basis of silane-terminated polymers for increasing the elasticity and decreasing the modulus of elasticity of said compositions in the cured state.

## Revendications

1. Composition comprenant :
a) au moins un polymère à fonction silane P ; ainsi que :
b) au moins un alkyltrialcoxysilane de formule (I) :
R²-Si-(OR¹)₃ (I)
dans laquelle :
R¹ désigne un radical hydrocarbure monovalent, linéaire ou ramifié, avec 1 à 12 atomes de carbone, qui présente éventuellement une ou plusieurs liaisons multiples C-C et/ou éventuellement des fractions cycloaliphatiques et/ou aromatiques ; et
R² désigne un radical hydrocarbure ramifié avec 6 à 10 atomes de carbone.

2. Composition selon la revendication 1, **caractérisée en ce que** R¹ désigne un groupement méthyle ou un groupement éthyle ou encore un groupement isopropyle.

3. Composition selon la revendication 2, **caractérisée en ce que** R¹ désigne un groupement méthyle.

4. Composition selon l'une quelconque des revendications précédentes, **caractérisée en ce que** R² désigne un radical hydrocarbure ramifié avec 8 atomes de carbone.

5. Composition selon l'une quelconque des revendications précédentes, **caractérisée en ce que** le radical hydrocarbure ramifié est un groupement alkyle plusieurs fois ramifié.

6. Composition selon l'une quelconque des revendications précédentes, **caractérisée en ce que** R² désigne un radical 2,4,4-triméthylpentyle.

7. Composition selon la revendication 1, **caractérisée en ce que** l'alkyltrialcoxysilane de formule (I) est le triméthoxy(2,4,4-triméthylpentyl)silane.

8. Composition selon l'une quelconque des revendications précédentes, **caractérisée en ce que** le polymère à fonction silane P présente des groupements terminaux de formule (II') : 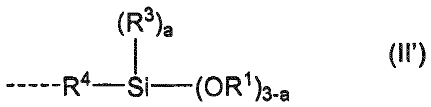 dans laquelle :
R¹ désigne autant le polymère à fonction silane P que l'alkyltrialcoxysilane de formule (I) pour des radicaux identiques ;
R³ représente un groupement alkyle avec 1 à 8 atomes de carbone ;
R⁴ désigne un groupement alkylène linéaire ou ramifié, éventuellement cyclique, avec 1 à 12 atomes de carbone, éventuellement avec des fractions aromatiques et éventuellement avec un ou plusieurs hétéroatomes ; et
a présente une valeur de 0 ou de 1.

9. Composition selon l'une quelconque des revendications précédentes, **caractérisée en ce que** la fraction d'alkyltrialcoxysilane de formule (I) est de 0,05 à 4 % en poids de la composition totale.

10. Composition selon l'une quelconque des revendications précédentes, **caractérisée en ce que** la composition présente, en fonction de son durcissement, un module d'élasticité à 0 à 100 % d'extension d'une valeur ≤ 0,4 MPa, mesurée selon la norme DIN EN 53504, avec une vitesse de traction de 200 mm/min, et une dureté Shore A d'une valeur ≥ 10, mesurée selon la norme DIN 53505.

11. Utilisation d'une composition selon l'une quelconque des revendications 1 à 10 comme adhésif, matériau étanche ou revêtement qui durcit à l'humidité.

12. Utilisation selon la revendication 11 comme matériau étanche pour la construction.

13. Composition durcie, **caractérisée en ce qu'**elle peut être obtenue à partir d'une composition selon l'une quelconque des revendications 1 à 10 après son durcissement avec de l'eau.

14. Utilisation d'un alkyltrialcoxysilane de formule (I), comme décrit dans l'une quelconque des revendications 1 à 10, dans des compositions à base de polymères à terminaison silane pour augmenter l'élasticité et réduire le module E de ces compositions à l'état durci.
